# EUROPEAN PATENT APPLICATION

(11) **EP 3 598 066 A1**
(43) Date of publication of application: **22.01.2020**
(21) Application number: 18184191.7
(22) Date of filing: 18.07.2018
(51) Int. Cl.: G01C 11/02, G01C 11/04, G01B 11/25, G01C 11/06

(54) **METHOD AND ARRANGEMENT FOR DETERMINING AT LEAST ONE OF DIMENSIONAL CHARACTERISTICS AND SHAPE CHARACTERISTICS OF A LARGE MEASUREMENT OBJECT**

(71) Applicant: Carl Zeiss Optotechnik GmbH, 83115 Neubeuern (DE); Tokyo Boeki Techno-System Ltd., Tokyo 104-0031 (JP)
(72) Inventor: Nakasato, Taro, Tenpaku-ku, Nagoya (JP); Hörr, Christian, 83126 Flintsbach am Inn (DE)
(74) Representative: Witte, Weller & Partner Patentanwälte mbB

(57) **Abstract**

A plurality of photogrammetry targets (22) are positioned on a measurement object (18). Respective target positions of the photogrammetry targets (22) are determined using a plurality of first images showing the measurement object (18) together with the photogrammetry targets (22). The respective target positions define a reference system. A plurality of partial 3D measurement data are determined using a 3D measurement device (16). The partial 3D measurement data are aligned and combined using the respective target positions. Based on the aligned 3D measurement data, dimensional and/or shape characteristics of the measurement object (18) are determined. According to an aspect, the partial 3D measurement data are determined in a first 3D measurement run, when the photogrammetry targets (22) are positioned on the measurement object (18), and in a second 3D measurement run, after the photogrammetry targets (22) have been removed from the measurement object (18).

## Description

The present invention relates to a method for determining at least one of dimensional characteristics and shape characteristics of a large measurement object, the method comprising the steps of
positioning a plurality of photogrammetry targets on the measurement object,
capturing a plurality of first images of the measurement object, while the plurality of photogrammetry targets are positioned on the measurement object,
determining respective target positions for the plurality of photogrammetry targets based on the plurality of first images,
defining a plurality of partial measurement areas on the measurement object,
determining respective partial 3D measurement data representing the plurality of partial measurement areas using a 3D measurement device,
matching the respective partial 3D measurement data and the respective target positions in order to determine aligned 3D measurement data for the large measurement object, and
determining the at least one of the dimensional characteristics and the shape characteristics based on the aligned 3D measurement data.

The invention further relates to a measurement arrangement for determining at least one of dimensional characteristics and shape characteristics of a large measurement object, the measurement arrangement comprising a plurality of photogrammetry targets configured for being positioned on the measurement object, a first camera configured for capturing a plurality of first images of the measurement object, while the plurality of photogrammetry targets are positioned on the measurement object, a 3D measurement device configured for determining respective partial 3D measurement data representing a plurality of partial measurement areas of the measurement object, and a processing unit configured for determining respective target positions for the plurality of photogrammetry targets based on the plurality of the first images, configured for matching the respective partial 3D measurement data and the respective target positions in order to determine aligned 3D measurement data for the large measurement object, and configured for determining the at least one of the dimensional characteristics and the shape characteristics based on the aligned 3D measurement data.

A method and an arrangement of this type are known, for instance, from a set of presentation slides titled "Stabilitätsprüfung projizierter Referenzpunkte für die Erfassung großvolumiger Messobjekte" by Murat Ürün et al., which presentation slides were publicly available on the internet and downloaded from https://iapg.jade-hs.de/3dtage/default_018.html on June 20, 2018.

Determining 3D characteristics of large measurement objects is a measurement task often occurring in modern automobile manufacturing plants, when it is desired to measure shape and/or dimensions of the car body during and/or after the assembly process. Notwithstanding, there are other applications for such a measurement method and arrangement beyond car body measurements. Accordingly, the method and the arrangement disclosed in the following may advantageously be used for measuring any kind of large objects, such as aircrafts, railway wagons, windmill turbine blades, building structures or components and parts thereof, by way of example. A large object in terms of the present disclosure is any object larger than the measuring volume of the 3D measurement device, such that a plurality of partial 3D measurements are required in order to cover the large object.

A general problem with measuring large objects results from the difficulty to achieve high measurement resolution and high measurement accuracy over large measurement areas. In order to achieve high measurement resolution and high measurement accuracy, the large measurement object is typically subdivided in smaller partial measurement areas, which are measured one after the other. The partial measurement results then have to be combined properly. This can be facilitated by using a second measurement approach based on photogrammetry targets.

Accordingly, the method and arrangement mentioned above use two different measurement approaches in order to achieve the desired accuracy for the large measurement object. A first measurement approach uses photogrammetry targets, i.e. predefined artificial marking elements that are attached or otherwise positioned, such as by light projection, on the measurement object. Capturing a plurality of first images from a plurality of different camera positions around the large measurement object provides image data representing the whole measurement object or at least major parts of it. Using the images of the photogrammetry targets captured from various perspectives allows to define a grid of defined target positions. The grid of target positions, which are preferably not equidistant, establishes some sort of a reference coordinate system or reference frame that may be virtually laid onto the large measurement object. Unfortunately, the photogrammetry targets do not provide "full" 3D data for the large measurement object with high resolution. Rather, they only provide 3D data at selected positions, namely where the photogrammetry targets have been placed.

Therefore, high resolution 3D measurement data is determined for selected partial measurement areas using a separate 3D measurement device. Often, the 3D measurement device comprises an optical 3D fringe projection sensor, as this is known from the above-mentioned presentation slides. In general, however, other 3D high resolution measurement approaches may be used. The partial measurement results can be aligned and combined by exploiting the reference frame from the photogrammetry approach. By combining both measurement approaches, it is possible to determine high resolution 3D data for a large measurement object.

Unfortunately, the known method and arrangement require a very high number of photogrammetry targets being positioned at a plurality of target positions. Moreover, the target positions have to be thoroughly planned, because each photogrammetry target covers the measurement object at the selected positions. With the known method and arrangement, it takes a lot of time to plan proper target positions and to carefully position the targets on the measurement object at the preplanned positions. By way of example, up to several hundred photogrammetry targets may be required for measuring a preassembled car body (sometimes referred to as body-in-white). In order to reduce the outlay for positioning such a high number of photogrammetry targets, the above-mentioned presentation slides propose photogrammetry targets being projected onto the measurement object by means of a light projector. One problem with this approach is that the target appearance in the first images can vary depending on the surface characteristics of the measurement object. Moreover, a light projector for projecting the targets is required and reliable data processing for this approach has not been achieved so far. Finally, projecting photogrammetry targets requires a free line-of-sight between the projector and the measurement object, which is not always possible to achieve, especially if it is desired to measure the outside and the inside of a car body.

US 2003/0112448 A1 also discloses a method and arrangement for determining 3D data of a large measurement object, wherein partial measurement data are combined using reference objects positioned on the measurement object.

US 2013/0271573 A1 discloses a 3D measurement sensor for determining partial 3D measurement data. The 3D measurement sensor is connected to a reference camera, the latter being used for capturing the first images.

According to US 2011/0007326 A1 and DE 10 2009 032 771 A1, reference marks are arranged around the measurement object. This is difficult to implement and quite expensive for large or very large measurement objects.

US 2013/0050410 A1 proposes a first measurement run for determining positions of reference marks arranged in a measuring cell, while the measuring cell is empty. The measurement object is positioned in the measuring cell after the positions of the reference marks have been determined. This approach requires a defined measuring cell that can accommodate the large object. Such a measuring cell is not always available. In addition, there is a risk that some markers are accidentally moved when the measurement object is put into the cell.

US 2005/0154548 A1 discloses a method for calibrating a 3D measuring system using reference marks arranged on a reference object.

DE 10 2014 106 641 A1 discloses a measurement method and arrangement comprising an optical 3D measurement device and an additional camera arranged on a movable arm of an industrial robot. The robot can be moved along at least two linear guides that are arranged in different directions.

In view of the above, it is an object of the present invention to provide a method and an arrangement of the above-mentioned type, wherein the effort for carrying out the measurements may be reduced.

In order to address this object, there is provided a method of the type mentioned at the beginning, wherein the step of determining respective partial 3D measurement data comprises a first 3D measurement run for determining first partial 3D measurement data representing the plurality of partial measurement areas and further comprises a second 3D measurement run for determining second partial 3D measurement data representing the plurality of partial measurement areas, wherein the first 3D measurement run is carried out while the plurality of photogrammetry targets are positioned on the measurement object, wherein the second 3D measurement run is carried out after the plurality of photogrammetry targets have been removed from the measurement object, and wherein the second partial 3D measurement data are aligned based on the first partial 3D measurement data and the respective target positions in order to determine the aligned 3D measurement data for the large measurement object.

According to another object, there is provided a measurement arrangement of the type mentioned at the beginning, wherein the processing unit is configured for determining the first partial 3D measurement data during a first 3D measurement run, for determining second partial 3D measurement data during a second 3D measurement run, and for aligning the second partial 3D measurement data based on the first partial 3D measurement data and based on the respective target positions in order to determine the aligned 3D measurement data, wherein the first partial 3D measurement data represent the measurement object together with the photogrammetry targets being positioned on the measurement object, and the second partial 3D measurement data represent the measurement object without the photogrammetry targets positioned on the measurement object.

There is also provided a computer program comprising program code configured for carrying out the afore-mentioned method, when the program code is executed on a computing device connected to a first camera and to a 3D measurement device configured for providing respective partial 3D measurement data representing a plurality of partial measurement areas on the measurement object.

The new method and arrangement subdivide the 3D measurement process into at least a first and a second measurement run. Prior to and during the first measurement run, the photogrammetry targets are positioned on the measurement object. This advantageously allows to match the respective partial 3D measurement data and the respective target positions. The target positions may be provided as a list of reference points or reference point list. As already explained above, the target positions define an individual, object-specific reference coordinate system for the large measurement object. The partial 3D measurement data is advantageously aligned and combined by using the target positions. Since the first measurement run determines the partial 3D measurement data, while the photogrammetry targets are positioned on the measurement object, matching the partial 3D measurement data of the first measurement run into the reference grid or onto the list of reference points is facilitated. In contrast to prior art methods and arrangements, the new method and arrangement do not stop here. Rather, a second 3D measurement run is carried out after the photogrammetry targets have been removed from the measurement object. The second measurement run therefore provides 3D measurement data representing the measurement object without the photogrammetry targets. Accordingly, the second measurement run provides 3D measurement data that is neither disturbed nor distorted by the photogrammetry targets. As a result, the second measurement run provides a better coverage of the measurement object.

Despite the second partial 3D measurement data being taken without the photogrammetry targets positioned on the measurement object, the new method and arrangement allow to efficiently combine the second 3D measurement data by exploiting the measurements results from the first measurement run. For instance, it is possible to match the first and second 3D measurement data in order to thereby align and combine the second partial measurement data.

Thus, the new method and arrangement advantageously combine the partial 3D measurement data from the first measurement run and the second measurement run. The 3D measurement data from the first measurement run can provide an overall reference system on account of their relation to the reference positions of the photogrammetry targets. The 3D measurement data from the second measurement run can complement the first 3D measurement data especially at those locations where the photogrammetry targets were positioned during the first measurement run.

The new method and arrangement are far less dependent on a well planned and predefined distribution of the photogrammetry targets, because the second partial 3D measurement data are determined on a "clean" measurement object. As a result, photogrammetry targets may be positioned on the measurement object more arbitrarily as in the prior art. This allows to plan and carry out the measurement on an individual measurement object more quickly and easily. In particular, it has turned out that it is much more efficient to carry out the partial 3D measurement steps twice instead of spending high effort in planning appropriate target positions and exactly placing the photogrammetry targets at those well planned target positions. Therefore, the new method and arrangement allow to save time and money without deteriorating the measurement results. Just in contrast, complete 3D measurement data for the whole object (including data at positions, where photogrammetry targets are placed) can be achieved. The above-mentioned object is therefore achieved.

According to a preferred refinement of the new method and arrangement, the first partial 3D measurement data are matched to the respective target positions, and the second partial 3D measurement data are aligned with the first partial 3D measurement data in order to determine the aligned 3D measurement data, the latter being used for determining the dimension and/or shape characteristics of the measurement object. The step of aligning the first and the second partial 3D measurement data may be carried out using one and the same transformation for both the first and the second partial 3D measurement data assuming that repeatability of the carrier system (e.g. robot) is accurate enough, using surface-based matching, such as an iterative closest point (ICP) algorithm in case enough geometry structure is available, using a combination of surface-based matching and image-based matching, or using a combination of any of those approaches.

According to this refinement, two separate alignment runs are carried out. A first alignment run aligns the first partial 3D measurement data using the target positions from photogrammetry. A second alignment run aligns the second partial 3D measurement data using the - already aligned - first partial 3D measurement data. Alternatively, the second partial 3D measurement data could be combined and aligned using both the first partial 3D measurement data and the target positions of the photogrammetry targets in a combined run. The preferred refinement has the advantage that existing algorithms and procedures can be used for combining and aligning the first partial 3D measurement data, and for combining and aligning the second partial 3D measurement data. The second alignment step may advantageously use any available best fit approach. Accordingly, the preferred refinement allows an efficient implementation of the new method arrangement in a cost-effective manner.

In a further refinement, the plurality of photogrammetry targets are arbitrarily positioned on a measurement object.

This refinement makes beneficial use of the second 3D measurement run. No special instructions for positioning the photogrammetry targets on the measurement object are required. The photogrammetry targets can more or less randomly be positioned on the surface of the measurement object. Moreover, positioning the plurality of photogrammetry targets may vary from one specimen of a measurement object to another specimen of the same type. This refinement avoids the high effort for perfectly planning target positions in advance, and it thus reduces the outlay for placing the photogrammetry targets on an individual measurement object.

In a further refinement, the 3D measurement device selectively provides a low-resolution measurement mode and a high-resolution measurement mode, with the first 3D measurement run being carried out using the low-resolution measurement mode. Preferably, the second measurement run is carried out using the high-resolution measurement mode. It is also preferred if the low-resolution measurement mode is a highspeed measurement mode compared to the high-resolution measurement mode, which requires more time.

This refinement is particularly advantageous, when an optical 3D measurement device is used, such as a fringe projection measurement device or any other camera-based measurement device. The refinement allows to further reduce the time for carrying out a complete 3D measurement, because the step of determining the first 3D measurement data can be carried out more quickly and efficiently in low-resolution mode. Low-resolution mode involves that less 3D measurement data is produced, which facilitates to reduce data processing time. On the other hand, measurement accuracy and resolution is maintained high, if the second measurement run is carried out using the high-resolution measurement mode, because the final 3D measurement data are based on the second measurement run.

In a further refinement, CAD data representing nominal characteristics of the large measurement object are provided and a measurement plan for operating the 3D measurement device is determined on the basis of the CAD data.

Since the 3D measurement device determines partial measurement data for the large measurement object, a broad or whole coverage of the measurement object requires a plurality of measurement steps, typically in successive order, using the 3D measurement device at various locations relative to the measurement object. In some exemplary embodiments, the 3D measurement device may be arranged on an industrial robot and the measurement plan defines movements of the 3D measurement device relative to the measurement object. In other exemplary embodiments, the 3D measurement object may be arranged on a fixed frame and the measurement object is moved relative to the frame. In any case, the measurement plan may define movement parameters of the measurement object relative to the 3D measurement device. It is also feasible that both the measurement object and the 3D measurement device are movable and the measurement plan defines respective movement parameters and measurement positions. By using CAD data representing nominal object characteristics, the measurement plan can efficiently be established with respect to minimizing relative movements and/or measurement time. Advantageously multiple coverage of partial measurement areas of the measurement object can be avoided or minimized. This also helps to reduce measurement time and increase measurement efficiency.

In a further refinement, preliminary partial 3D measurement data is determined on a reference measurement object during a preliminary 3D measurement run, and the preliminary partial 3D measurement data is matched to the CAD data.

This refinement helps to optimize the measurement plan and to facilitate efficient automatic execution of the first and second measurement runs.

In a further refinement, the plurality of photogrammetry targets are positioned on the reference measurement object for determining the measurement plan.

This refinement also helps to optimize the measurement plan, and in particular facilitates proper alignment and combination of the preliminary partial 3D measurement data during set-up of the new method and arrangement.

In a further refinement, the preliminary partial 3D measurement data are determined without the photogrammetry targets being positioned on the reference measurement object.

While the photogrammetry targets may nevertheless be used in the process of establishing the measurement plan, the preliminary partial 3D measurement data are determined without the photogrammetry targets being positioned on the reference measurement object in accordance with this refinement. This refinement facilitates the step of matching the preliminary partial 3D measurement data to the CAD data. Notwithstanding, the photogrammetry targets on the reference measurement object can advantageously be used for planning how the plurality of first images are captured as efficiently as possible. Accordingly, the measurement plan advantageously further includes how the first camera is used for capturing the plurality of first images.

In a further refinement the measurement plan is used for both the first 3D measurement run and the second 3D measurement run.

According to this refinement, the measurement plan is carried out twice as far as it concerns the relative movements of the 3D measurement device and the measurement object. Alternatively, the second measurement run could be carried out in accordance with a different measurement plan in some other exemplary embodiments. The preferred refinement helps to increase efficiency of the new method and arrangement and facilitates proper matching of the first and second partial measurement data.

In a further refinement, the photogrammetry targets comprise an elongate - and preferably flexible - support structure and a plurality of defined markers arranged on the support structure.

In some exemplary embodiments, the support structure may comprise magnets and/or sucker cups for attaching the support structure to the measurement object. The support structure may comprise cords, belts, nets or mats than can be arranged on the measurement object, with the defined markers being attached or embodied on the cords, belts, nets or mats. The support structure may be made from textile materials, fabrics, leather, rubber or other flexible materials. In further exemplary embodiments, the support structure may comprise foldable sticks, stripes or other rigid elements that are movably connected to each other at one or more variable joints. Using photogrammetry targets on such a support structure appears to be disadvantageous at first glance, because such a support structure typically covers some areas of the measurement object, which cannot be measured in the first measurement run. On account of the second measurement run, however, large coverage of the measurement object by support structures is easily overcome. Therefore, this refinement beneficially exploits the new method and arrangement and it even adds to their efficiency, because a plurality of photogrammetry targets can easily and quickly be placed onto the measurement object using such support structures. It is particularly preferable if the support structure is flexible, because this allows to arrange a plurality of defined markers around edges of the measurement object, such as around a door frame of a car body. It is further preferred if the photogrammetry targets are arranged on the support structure in a predefined permanent relationship, because this facilitates to maintain a predefined relation between adjacent targets. This refinement, for instance, facilitates a full coverage measurement of both interior surfaces and exterior surfaces of a car body or other complex measurement objects having various surfaces facing away from each other.

It goes without saying that the features mentioned above and those yet to be explained hereinafter can be used not only in the respective combination, but also in other combinations or in isolation without departing from the scope of the present invention.

Exemplary embodiments are shown in the drawing and will be explained in more detail in the following description. In the drawing:
- Fig. 1: shows a simplified illustration of an embodiment of the new measurement arrangement,
- Fig. 2: shows a simplified flow chart illustrating steps for teaching the measurement arrangement of Fig. 1, and
- Fig. 3: shows a simplified flow chart illustrating an exemplary embodiment of the new method.

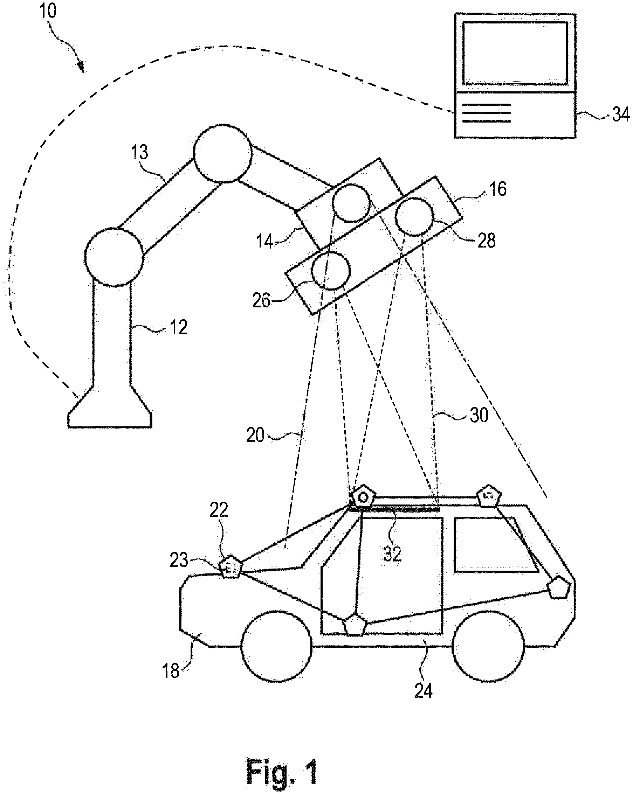

In Fig. 1, an exemplary embodiment of the new arrangement is designated by reference number 10 in its entirety. The arrangement 10 comprises a robot 12 having an arm 13 that is movable in various directions and orientations. A first camera 14 and a 3D measurement sensor 16 are arranged on the free end of arm 13 in a combined fashion. An exemplary measurement object is designated by reference number 18. By way of example, the measurement object is a car body, especially a body-in-white. As indicated further above, however, a new method and arrangement are not only suitable for determining individual characteristics of car bodies. Rather, they are well suited for determining 3D characteristics of any large measurement object.

As is indicated by reference number 20, the first camera 14 has a rather broad field of view so that the first camera 14 can capture first images that show large parts of the measurement object 18. In particular, the field of view 20 is configured to capture images of the measurement object 18, which images contain a plurality of photogrammetry targets 22 arranged on the measurement object 18. By way of example, the photogrammetry targets each comprise one or more individual markings or markers 23 such that the photogrammetry targets can be identified and distinguished from one another in the camera images.

In some exemplary embodiments, the photogrammetry targets are small cubes or other polyhedral bodies with appropriate markers on one or more outer surfaces (facets). The target bodies may be made from plastic or foam, and they may be attached to the measurement object via magnets and/or suction cups (not shown here for sake of simplicity). In some preferred exemplary embodiments, a plurality of photogrammetry targets are arranged on a common support structure 24. The support structure 24 may connect a plurality of targets 22 in such a manner that their mutual relative positions and orientations are well defined and fixed. For example, the support structure 24 may comprise rigid bars that are movably connected at appropriate joints. In other exemplary embodiments, the support structure 24 may comprise flexible elements, such as leather belts, textile belts, flexible rubber strips or the like. In yet further exemplary embodiments, the support structure 24 may comprise a textile mat or net, where appropriate targets 22 are attached to. The targets may be physically attached to the support structure 24, or the targets 22 may be printed onto the surface material of the support structure. In yet further exemplary embodiments, a plurality of targets 22 may be freely arranged on the measurement object 18. It is also feasible that appropriate photogrammetry targets 22 are projected onto measurement object 18, as is proposed in the presentation slides mentioned initially.

3D measurement sensor 16 comprises a fringe projector 26 and a further camera 28 in this exemplary embodiment. Other setups with one projector, two 3D-cameras and one photogrammetry camera are also possible. Projector 26 and camera 28 together form an optical 3D fringe projection measurement sensor, as it is well known to a skilled person. By way of example, 3D measurement sensor 16 may be an optical 3D fringe projection sensor as it is sold under the brand name Zeiss Comet by Carl Zeiss Optotechnik GmbH in Neubeuern, Germany. The new method and arrangement, however, are not limited to this specific kind of 3D measurement sensor.

As can be seen from Fig. 1, the field of view 30 of camera 28 is rather narrow compared to the field of view 20 of first camera 14. Therefore, 3D measurement sensor 16 typically allows to determine 3D measurement data for partial areas of measurement object 18 only. By way of example, reference number 32 designates a light pattern generated by projector 26 on measurement object 18, with said light pattern defining a partial measurement area. Light pattern 32 is captured by camera 28 and 3D coordinates of the partial measurement area are determined based on triangulation, as this is well known to the skilled person. The size of the fringe pattern generated by projector 26 and field of view 30 of camera 28 limit the measurement area for which 3D sensor 16 can determine 3D measurement data in one measurement step.

Reference number 34 designates a computing device, which may be a general purpose Personal Computer as it is commercially available from various vendors, or it may be a special purpose computer for processing the image data from camera 14 and 3D sensor 16. The computing device 34 is therefore connected to the first camera 14 and to the 3D measurement sensor 16 in order to receive the first images from camera 14 and the camera images from camera 28. Computing device 34 may also be connected to robot 12 or to a robot controller (not shown here for sake of simplicity) in order to operate as a central control and evaluation unit of the measurement arrangement 10.

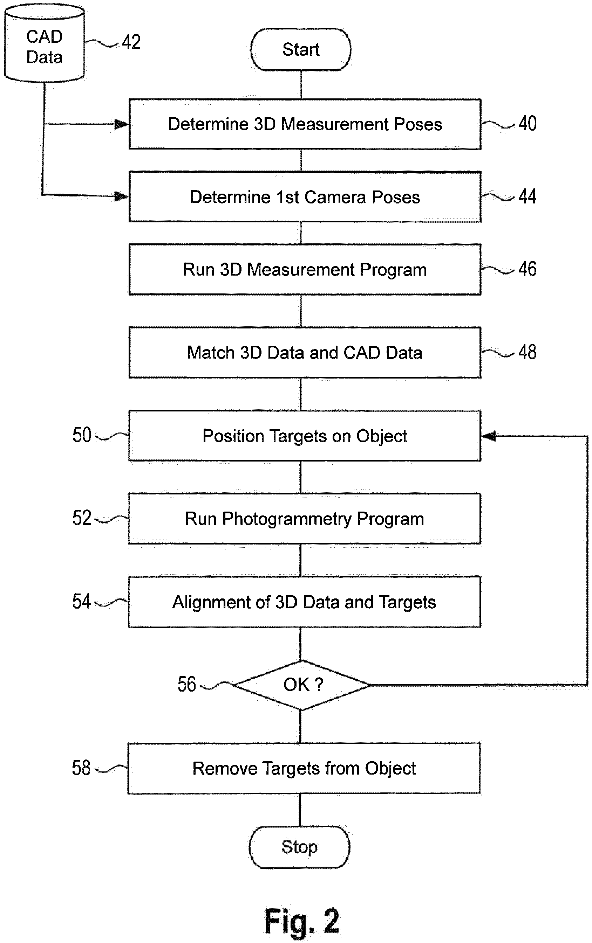

Fig. 2 shows a simplified flow chart illustrating method steps for setting up and teaching the measurement arrangement 10 from Fig. 1. According to step 40, appropriate 3D measurement poses of 3D measurement sensor 16 are determined. Each pose defines a position and orientation of measurement sensor 16 relative to measurement object 18. Advantageously, CAD data 42 representing nominal characteristics of measurement object 18 are used for determining appropriate measurement poses. A plurality of appropriate measurement poses are typically required for determining 3D measurement data for the large measurement object 18.

According to step 44, a plurality of camera poses for the first camera 14 are determined in such a manner that first camera 18 is enabled to capture first images of measurement object 18 such that all desired measurement areas are covered. Advantageously, CAD data 42 may also be used in step 44. It will be appreciated that steps 40 and 44 may be carried out one after the other in any order or in parallel. Accordingly, the series of steps 40, 44 shown in Fig. 2 is not limiting.

According to step 46, a measurement program resulting from the determination of 3D measurement poses according to step 40 is executed on a reference specimen of measurement object 18. According to step 48, 3D measurement data determined in step 46 is matched to the CAD data using any well known best-fit algorithm. Step 48 therefore allows to check if the measurement poses determined in step 40 are appropriate in order to determine 3D measurement data for any desired area of measurement object 18. If necessary, step 40 may be repeated in order to change selected measurement poses and/or add or remove measurement poses. In the end, step 48 is intended to result into a 3D measurement program that allows to determine 3D measurement data for each and any area of measurement object 18 that is of particular interest.

According to step 50, photogrammetry targets 22 are then positioned on the reference specimen of measurement object 18. In preferred embodiments, targets 22 are arbitrarily positioned on the reference specimen without any special instructions regarding the position and orientation of targets 22. According to step 52, a photogrammetry program is executed in order to capture a plurality of first images of the reference specimen of measurement object 18. Based on the captured images, the photogrammetry program determines respective target positions for the plurality of photogrammetry targets 22, as it is known to any skilled person having experience in photogrammetry. The respective target positions result in a list of reference points on the (specimen of) measurement object 18. The reference point list thus defines a reference coordinate system or reference frame representing the measurement object 18 to be measured. If appropriate, step 44 may be repeated in order to optimize the first camera poses and/or add or remove appropriate camera poses. Again, it will be appreciated that the series of steps 40 to 52 is not limited to the series of steps shown in Fig. 2. While it is necessary that steps 44, 50 and 52 are carried out one after the other, determining 3D measurement data using 3D sensor 16 and matching said 3D measurement data to the CAD data may be carried out before or after the reference point list according to step 52 is determined.

According to step 54, the 3D measurement data determined using 3D sensor 16 are aligned and combined using the reference point list from step 52. In other words, the partial 3D measurement data is aligned and combined using the plurality of reference points, with each reference point from the reference point list representing a respective target position.

According to step 56, a check is made if the existing reference point list is sufficient and appropriate for aligning and combining all the desired 3D measurement data. If appropriate, additional targets may be placed on (specimen of) measurement object 18 and steps 52 and 54 may be repeated. Once an appropriate alignment and combination of the 3D measurement data determined in step 46 is achieved, the teach-in and programming process may be terminated and the targets may be removed from the specimen measurement object according to step 58.

As can be seen from Fig. 2, determination of 3D measurement data during the teach-in and programming process preferably takes place without photogrammetry targets 22 being positioned on the specimen of measurement project 18. In general, however it is feasible to determine the 3D measurement data while photogrammetry targets are positioned on the specimen of measurement object 18, and 3D data representing target positions may be used in step 54.

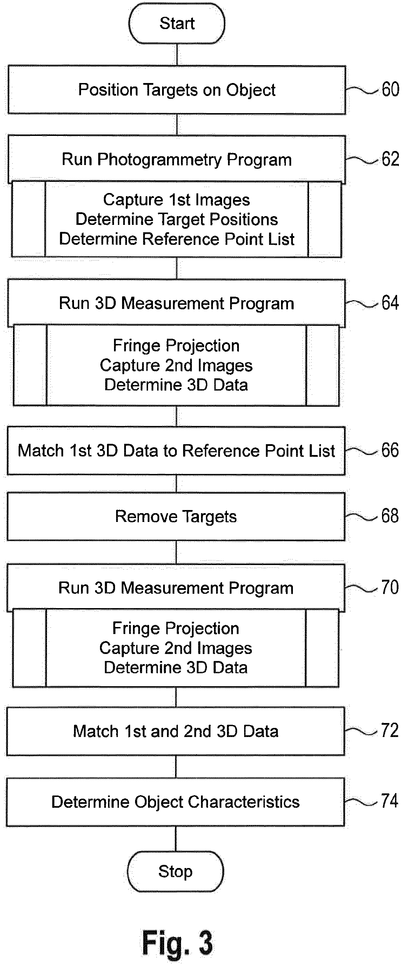

Fig. 3 shows a simplified flow chart illustrating an exemplary embodiment of the new method. According to step 60, photogrammetry targets 22 are positioned on individual measurement object 18 that is going to be measured. According to step 62, a photogrammetry program, as it may be determined in accordance with Fig. 2, is executed. As will be appreciated by those skilled in the art, a plurality of first images is captured using first camera 14 and target positions of the photogrammetry targets 22 positioned on measurement object 18 are determined hereby. As a result of step 62, a reference point list representing respective target positions of the plurality of targets 22 is provided.

According to step 64, a 3D measurement program is executed using 3D measurement sensor 16. As will be appreciated by those skilled in the art, first 3D measurement data may be determined for a plurality of partial measurement areas on measurement object 18 using fringe projector 26 and camera 28. As mentioned above, other 3D measurement sensors may be used here, such as tactile 3D measurements, laser based 3D measurements or any other 3D measurements including electromagnetic waves, such as in Radar or Lidar, and/or acoustic waves, such as in Sonar.

According to step 66, the first 3D measurement data from step 64 are matched to the reference point list from step 62 in order to align and combine the first partial 3D measurement data. In preferred exemplary embodiments, 3D measurement sensor 16 may be operated with a low-resolution mode in step 64 in order to decrease data processing load.

According to step 68, photogrammetry targets 22 are removed from measurement object 18. According to step 70, the measurement program is executed again and second partial 3D measurement data are determined for the same partial areas of measurement object 18 that have already be measured in the first 3D measurement run 64. It may be possible and, if so, preferable to rescan only at selected positions in the second 3D measurement run, especially, if no photogrammetry targets have occluded relevant measurement points. Accordingly, there is no need for revisiting this measurement pose again.

According to step 72, the first partial 3D measurement data from step 64 and the second partial 3D measurement data from step 70 are matched using any appropriate best-fit algorithm and/or using the same transformation by assuming a sufficient repeatability of the mover mechanics. As a result of step 72, aligned and combined 3D measurement data representing all measured areas of measurement object 18 are achieved. The second partial 3D measurement data may replace the first partial 3D measurement data, or it may be combined with the first partial 3D measurement data in such a manner that measurement points occluded by photogrammetry targets in the first measurement run are replaced by respective data from the second measurement run.

According to step 74, dimensional and/or shape characteristics of measurement object 18 are determined based on the aligned and combined 3D measurement data. For example, dimensions of selected features of measurement object 18, such as the diameter of a bore, the position of a selected feature, the mutual distance between two or more selected features and/or the body shape of selected areas may be determined using the aligned and combined 3D measurement data.

## Claims

1. A method for determining at least one of dimensional characteristics and shape characteristics of a large measurement object (18), the method comprising the steps of:
- positioning a plurality of photogrammetry targets (22) on the measurement object (18),
- capturing a plurality of first images of the measurement object (18), while the plurality of photogrammetry targets (22) are positioned on the measurement object (18),
- determining respective target positions for the plurality of photogrammetry targets (22) based on the plurality of first images,
- defining a plurality of partial measurement areas on the measurement object,
- determining respective partial 3D measurement data representing the plurality of partial measurement areas using a 3D measurement device (16),
- matching the respective partial 3D measurement data and the respective target positions in order to determine aligned 3D measurement data for the large measurement object (18), and
- determining the at least one of the dimensional characteristics and the shape characteristics based on the aligned 3D measurement data,
**characterized in that** the step of determining respective partial 3D measurement data comprises a first 3D measurement run (64) for determining first partial 3D measurement data representing the plurality of partial measurement areas and further comprises a second 3D measurement run (70) for determining second partial 3D measurement data representing the plurality of partial measurement areas, wherein the first 3D measurement run (64) is carried out while the plurality of photogrammetry targets are positioned on the measurement object, wherein the second 3D measurement run (70) is carried out after out the plurality of photogrammetry targets have been removed from the measurement object, and wherein the second partial 3D measurement data are aligned based on the first partial 3D measurement data and the respective target positions in order to determine the aligned 3D measurement data for the large measurement object.

2. The method of claim 1, wherein the first partial 3D measurement data are matched to the respective target positions, and the second partial 3D measurement data are aligned with the first partial 3D measurement data in order to determine the aligned 3D measurement data.

3. The method of claim 1 or 2, wherein the plurality of photogrammetry targets (22) are arbitrarily positioned on the measurement object (18).

4. The method of any of claims 1 to 3, wherein the 3D measurement device (16) selectively provides a low-resolution measurement mode and a high-resolution measurement mode, with the first 3D measurement run being carried out using the low-resolution measurement mode.

5. The method of any of claims 1 to 4, further comprising a step of providing CAD data (42) representing nominal characteristics of the large measurement object (18), and comprising a step of determining a measurement plan for operating the 3D measurement device on the basis of the CAD data (42).

6. The method of claim 5, further comprising a step of determining (46) preliminary partial 3D measurement data on a reference measurement object during a preliminary 3D measurement run, and comprising a step of matching (48) the preliminary partial 3D measurement data to the CAD data.

7. The method of claim 6, further comprising a step of positioning the plurality of photogrammetry targets (22) on the reference measurement object (18) for determining the measurement plan.

8. The method of claim 6 or 7, wherein the preliminary partial 3D measurement data are determined without the photogrammetry targets (22) being positioned on the reference measurement object.

9. The method of any of claims 5 to 8, wherein the measurement plan is used for both the first 3D measurement run (64) and the second 3D measurement run (70).

10. The method of any of claims 1 to 9, wherein the photogrammetry targets (22) comprise a elongate support structure (24) and a plurality of defined markers (23) arranged on the support structure (24).

11. A measurement arrangement for determining at least one of dimensional characteristics and shape characteristics of a large measurement object (18), the measurement arrangement comprising
- a plurality of photogrammetry targets (22) configured for being positioned on the measurement object (18),
- a first camera (14) configured for capturing a plurality of first images of the measurement object (18), while the plurality of photogrammetry targets (22) are positioned on the measurement object (18),
- a 3D measurement device (16) configured for determining respective partial 3D measurement data representing a plurality of partial measurement areas (32) on the measurement object (18), and
- a processing unit (36) configured for determining respective target positions for the plurality of photogrammetry targets (22) based on the plurality of the first images, for matching the respective partial 3D measurement data and the respective target positions in order to determine aligned 3D measurement data for the large measurement object, and for determining the at least one of the dimensional characteristics and the shape characteristics based on the aligned 3D measurement data,
**characterized by** the processing unit (36) being configured for determining first partial 3D measurement data during a first 3D measurement run (64), for determining second partial 3D measurement data during a second 3D measurement run (70), and for aligning the second partial 3D measurement data based on the first partial 3D measurement data and based on the respective target positions in order to determine the aligned 3D measurement data, wherein the first partial 3D measurement data represent the measurement object (18) together with the photogrammetry targets (22) being positioned on the measurement object (18), and the second partial 3D measurement data represent the measurement object (18) without the photogrammetry targets (22) positioned on the measurement object.

12. A computer program comprising program code configured for carrying out the method according to any of claims 1 to 10, when the program code is executed on a computing device (36) connected to a first camera (14) configured for capturing a plurality of first images of the measurement object (18), while a plurality of photogrammetry targets (22) are positioned on the measurement object (18), and connected to a 3D measurement device (16) configured for providing respective partial 3D measurement data representing a plurality of partial measurement areas on the measurement object (18).
